# EUROPÄISCHE PATENTSCHRIFT

(11) **EP 1 116 445 B1**
(45) Veröffentlichungstag und Bekanntmachung des Hinweises auf die Patenterteilung: **18.10.2006**
(21) Anmeldenummer: 01100527.9
(22) Anmeldetag: 09.01.2001
(51) Int. Cl.: A23L 1/48, A23P 1/08, A23L 1/39

(54) **Verfahren zur Speisezubereitung mit tiefgefrorenem Speiseergänzungsmaterial**
Process for preparing food with frozen complementary food material
Procédé de préparation d'un aliment à l'aide d'un aliment complémentaire surgelé

(30) Priorität: 11.01.2000 DE 10000773
(43) Veröffentlichungstag der Anmeldung: 18.07.2001
(73) Patentinhaber: MEGGLE Aktiengesellschaft, 83512 Wasserburg (DE)
(72) Erfinder:
(74) Vertreter: Herzog, Markus

(56) Entgegenhaltungen:
- EP-A- 0 648 431
- EP-A- 0 835 615
- CA-A- 2 139 685
- DE-A- 3 716 456
- DE-A- 19 645 780
- DE-A- 19 740 737
- US-A- 4 275 082
- US-A- 4 894 245
- US-A- 4 929 456
- PATENT ABSTRACTS OF JAPAN vol. 012, no. 353 (C-530), 21. September 1988 (1988-09-21) & JP 63 109748 A (HOUSE FOOD IND CO LTD), 14. Mai 1988 (1988-05-14)
- PATENT ABSTRACTS OF JAPAN vol. 013, no. 187 (C-592), 2. Mai 1989 (1989-05-02) & JP 01 013977 A (AJINOMOTO CO INC;OTHERS: 01), 18. Januar 1989 (1989-01-18)
- PATENT ABSTRACTS OF JAPAN vol. 1998, no. 03, 27. Februar 1998 (1998-02-27) & JP 09 285278 A (EBARA SHOKUHIN KOGYO KK), 4. November 1997 (1997-11-04)

## Beschreibung

Die Erfindung betrifft ein Verfahren zur Speisezubereitung, bei dem auf eine aus einer Speisegrundmasse bestehende Speisegrundschicht eine Speiseergänzungsschicht aufgetragen wird.

Eine verbreitete Maßnahme in der Speisezubereitung ist es, auf eine Speisegrundschicht, beispielsweise ein Kartoffel-, Nudel-, Reis-, Hülsenfrüchtegericht od. dgl., eine Speiseergänzungsschicht zur Geschmacksverbesserung oder Nährstoffanreicherung aufzutragen. Es sei z. B. auf das Herstellen eines Kartoffelgratins oder auch einer Pizza verwiesen. Bei der Herstellung eines Kartoffelgratins wird in einer Zwischenphase des Kochvorgangs auf die Oberfläche einer Schicht von scheibenförmig geschnittenen Kartoffeln eine Ergänzungsmasse in Soßenform aufgeschüttet oder aufgestrichen und gegebenenfalls Käse darüber gestreut, der sich dann im weiteren Verlauf des Kochvorgangs zu einer haut- oder netzartigen Gratinschicht ausbilden kann. Bei der Herstellung einer Pizza wird auf einen Hefeteigboden eine Soße, z. B. Tomatensoße im flüssigen Zustand aufgetragen, und anschließend werden Feststücke, z. B. Salamischeiben, Peperoni, Käsestücke, aufgelegt, worauf der so erhaltene Schichtenverband einem weiteren Koch- oder Backvorgang unterworfen wird.

Aus der EP O 557 425 B1 und der US-A-5 243 899 ist es bekannt, ein- oder mehrschichtige Speiseergänzungsplatten auf der Basis von Schmelzkäse herzustellen, wobei in diesen Speiseergänzungsplatten, auch Toppings genannt, stückige Bestandteile, wie Gemüsestückchen, Wurststückchen und Fleischstückchen, enthalten sein können. Die Platten werden durch chemische, mechanische oder thermische Methoden geschmolzen und können zum Zwecke der Langzeitaufbewahrung auf Temperaturen von bis zu -40°C gefroren werden. Zur Pizzaherstellung werden Speiseergänzungsplatten auf die Pizzaböden gelegt und danach einem Backvorgang unterworfen. Zwischen die Pizzaböden und die Speiseergänzungsplatten kann Tomatensoße in flüssiger Form aufgetragen werden. Die Struktur üblicher Pizzaböden erlaubt im Wesentlichen kein Eindringen der Speiseergänzungsmasse in den Pizzateig.

Aus der US-A-4 753 815 ist es bekannt, Käse in Granülenform bereitzustellen und auf eine Temperatur von -40°C abzukühlen, wobei die gefrorenen Granülen beim Verlassen der Herstellungsanlage eine Temperatur von ungefähr -30°C annehmen. Die noch tiefgefrorenen Käsegranülen können direkt aus dem Tiefkühlvorrat auf die Pizzas vor dem Backvorgang aufgebracht werden.

Die EP 0 648 431 A1 betrifft die Zubereitung von Hamburgern durch Bereitstellen von tiefgefrorenem Hackfleisch und einer soßenartigen Speiseergänzungsschicht die dadurch erzeugt wird, dass zunächst vorbereitete Soße in tiefgefrorenem, scheibenarigem Zustand bereitgestellt wird und dann mit einem zweilagigen Überzugsmaterial überzogen wird. Bei der Zubereitung werden das tiefgefrorene Hackfleisch und das tiefgefrorene Speiseergänzungsmaterial voneinander getrennt erwärmt.

Die JP-A 63109748 offenbart eine in einer Mikrowelle zu erwärmende Speise. Dabei bildet Reis eine Speisegrundschicht, auf welche in einem gefrorenen Zustand soßenförmiges Material aufgelegt wird. Bei Erwärmung in der Mikrowelle wird auch diese gefrorene Soße zusammen mit dem Reis erwärmt.

Die JP-A 010113977 offenbart das Positionieren von zwei Lagen von Speisematerial übereinander. Eine untere Lage umfasst dabei feste oder stückige Bestandteile, wie Gemüse oder Fisch. Eine obere Lage umfasst eine gefrorene Soße. Durch Erwärmen von unten her wird die untere Lage und damit auch die obere Lage erwärmt und geschmolzen.

Aus der JP-A 09285278 ist das Bereitstellen von stückchenartigem Speiseergänzungsmaterial bekannt, das durch das Zerbrechen von tiefgefrorenem Material erzeugt wird.

Die US 4,275,082 offenbart die Zubereitung von Blätterteiggebäck mit Füllung. Auf eine ungebackene Blätterteiglage wird das Füllungsmaterial in gefrorenem Zustand aufgebracht. Beim Backen umgibt dann der aufquellende Blätterteig die allmählich auftauende Füllung.

Die DE 197 40 737 A1 offenbart die Erzeugung von Lebensmittelformstücken, z. B. Butterstücken, durch Hindurchführen des fließfähigen Materials durch eine düsenartige Abgabevorrichtung.

Aus der DE 37 16 456 A1 ist es bekannt, auf einen Teigboden, wie er beispielsweise als Pizzaboden verwendet wird, Belagmaterial aufzubringen, das auf dem Teigboden eine gewünschte Form darstellt, also beispielsweise einen Randbereich freilässt. Der Teigboden kann vorgebacken werden, ehe die Belagschicht darauf gelegt wird.

Die DE 196 45 708 A1 offenbart das Bereitstellen von Soßenmaterial als tiefgefrorenen, mit Sollbruchlinien ausgebildeten Block.

Die EP 0 835 615 A1 offenbart eine Vorgehensweise zum Einfrieren abgemessener Soßenportionen. Die einzufrierende Soße wird in dosierter Art und Weise auf eine Gefrieroberfläche aufgebracht, angefroren und dann mit noch nicht gefrorener Soße vermengt, um ein formbares Soßengebinde zu erhalten.

Die US 4,929,456 offenbart das Bereitstellen abgemessener Soßenmengen zur Erzeugung gefrorener Soßengebinde. Dabei wird die Soße durch das Vermischen verschiedener Bestandteile, wie z. B. Pfeffer und Zwiebelpulver, mit schmelzbaren Bestandteilen, wie Schweizerkäse, Parmesankäse und dergleichen erzeugt. Die Soßenmixtur wird erwärmt, die schmelzbaren Bestandteile schmelzen auf und vermischen sich mit den flüssigen Bestandteilen. Durch nachfolgendes Tiefgefrieren werden Soßenpelletts erzeugt, die dann mit anderen tiefgefrorenen Speisen vermengt werden können.

Die CA 2,139,685 A1 offenbart das Bereitstellen abgepackter und vorbereiteter Speisen, bei welchen in einem ersten Verpackungsbereich vorbereitetes Rindfleisch oder dergleichen enthalten ist und in einem zweiten Verpackungsbereich eine zum Verzehr vorgesehene Soße enthalten ist.

Die US 4,894,245 betrifft die Zubereitung gefrorener Käsepartikel, wobei bei dem Zubereitungsvorgang gefrorene Käsepartikel mit einer wässrigen Substanz, die einen oder mehrere zusätzliche Bestandteile enthalten, überzogen werden. Werden derartige Partikel dann bei einem Backvorgang auf Lebensmittelprodukte aufgebracht, so wird sich diese Beschichtung verflüssigen und sich über die Käsepartikel bzw. in diese hinein verteilen.

Es ist die Aufgabe der vorliegenden Erfindung, ein Verfahren zur Speisezubereitung vorzusehen, bei dem auf eine aus einer Speisegrundmasse bestehende Speisegrundschicht eine Speiseergänzungsschicht aufgebracht wird, mit welchem Verfahren insbesondere in Großküchen die Speisenzubereitung leichter durchgeführt werden kann. Erfindungsgemäß wird diese Aufgabe durch das im Anspruch 1 definierte Verfahren gelöst.

Mit der erfindungsgemäßen Verfahrensweise gelingt es, Speisegrundschichten mit körnigen und/oder stückigen Bestandteilen auf ergonomisch einfache Weise mit Speiseergänzungsmassen zu versetzen, ohne dass aufwändige Mischvorgänge zur Vermischung von Speisegrundmasse und Speiseergänzungsmasse durchgeführt werden müssen. Die Speiseergänzungsmasse kann in einer leicht aufzutragenden Form zeitlich und räumlich unabhängig von der Endphase der Zubereitung der verzehrfertigen Speise bereitgestellt werden.

Um vorab schon eine Vorstellung von dem Ablauf einer Speisezubereitung nach dem erfindungsgemäßen Verfahren zu vermitteln, sei auf folgendes vereinfachtes Beispiel hingewiesen:

Es wird eine Béchamelsoße nach herkömmlichen Rezepten und Verfahrensweisen vorbereitet. Diese Béchamelsoße liegt am Ende des Zubereitungsvorgangs mit einer Temperatur von beispielsweise 80°C vor. In die noch heiße Béchamelsoße werden stückige Gemüseteile eingerührt, die bei der Temperatur der Béchamelsoße ihren stückigen Charakter beibehalten und u. U. im Augenblick der Eingabe schon vorgekocht sind, so dass sie einer weiteren Kochbehandlung nicht bedürfen oder nur einer kurzen Ergänzungskochbehandlung. Gleichzeitig mit diesen Gemüsestücken, z. B. Karotten oder Zwiebeln, kann Käse in der Bechamelsoße dispergiert werden, der den Geschmack und den Nährstoffgehalt der Béchamelsoße verbessert. Die Béchamelsoße wird hierauf auf etwa 30° abgekühlt. Bei der Temperatur von 30° können nun Käsestücke eingerührt werden, deren stückige Struktur erhalten bleiben soll und die deshalb nicht der zunächst hohen Temperatur der Soße ausgesetzt werden.

Die so erhaltene mit Käsestücken und Gemüsestücken befrachtete Soße wird sodann in eine flache Gefrierform eingegossen, in welcher sie aufgrund ihrer Viskosität durch Schwerkraftfluss zu einer Schicht ausbreitet, wobei die Schichtbildung gegebenenfalls durch einen Streichvorgang unterstützt werden kann. Vor dem Eingießen der Soße in die Gefrierform kann auf deren Boden und gegebenenfalls auch an deren Seitenwänden eine Trennfolie angelegt werden, wobei Trennfolie insbesondere auch Trennpapier, z. B. Pergamentpapier, umfasst. Zweck dieser Trennfolie ist es, das spätere Entnehmen der Speiseergänzungsplatte aus der Gefrierform zu erleichtern und bei einem eventuellen Stapeln von Speiseergänzungsplatten für Transportzwecke eine schützende Zwischenlage zwischen aufeinander folgenden Platten bereit zu stellen.

Die tiefgefrorenen Speiseergänzungsplatten werden nach dem Tiefgefriervorgang aus den Gefrierformen entnommen und tiefgekühlt in einer Umverpackung z.B. einem Karton, einem Beutel, einem Isolierbehälter oder in einem Tiefkühlbehälter, gegebenenfalls in einem Tiefkühlwagen, gestapelt und an den Ort der endgültigen Speisezubereitung, z. B. in eine Großküche, gebracht.

In der Großküche ist in der Zwischenzeit die Speisegrundschicht vorbereitet worden, die beispielsweise aus Nudeln besteht. Die Nudeln stehen kurz vor der Erreichung eines verzehrgeeigneten Kochzustands und liegen in heißer Form, beispielsweise in einer "Gastronormschale" vor. Man kann sich leicht vorstellen, dass in einer Großküche, in der für eine Kantine gekocht wird, Nudeln als Beilage zu Fleisch oder Fisch oder sonstigen Gerichten in größerer Menge zubereitet, werden und dass ein Teil dieser Nudeln zur Herstellung einer Schonkost, fleischarmen oder vegetarischen Speise eingesetzt werden kann. Diese Nudeln werden dann als Grundschicht in eine Gastronormschale eingefüllt, und zwar vorzugsweise annähernd in derjenigen Höhe, in der die Speise verzehrfertig serviert werden soll. Um die Geschmacks- und Nährstoffqualität dieser Speisegrundschicht zu verbessern, wird nunmehr auf die Oberseite der Speisegrundschicht eine, wie vorstehend beschrieben, hergestellte tiefgefrorene Speiseergänzungsschicht aufgelegt. Das Auflegen ist äußerst einfach. Es bedarf keiner Kochgeräte, da die Speiseergänzungsschicht wie eine starre Platte gehandhabt werden kann. Anschließend wird dann der Schichtaufbau, bestehend aus der Speisegrundschicht und aus der Speiseergänzungsschicht, in einen Heißraum, beispielsweise eines Herds, eines Combidämpfers oder eines Durchlaufofens, eingebracht. Dabei wird die Speiseergänzungsschicht zum Erweichen gebracht und auf Verzehrtemperatur aufgeheizt. Die Erwärmung der Speiseergänzungsplatte kann zumindest teilweise durch den Wärmegehalt der bereits vorgekochten Nudelschicht geliefert werden. Darüber hinaus ist es möglich, durch äußere Wärmezufuhr, z. B. mittels Infrarotstrahlern oder durch Luft- oder Dampfkonvektion, die Speiseergänzungsplatte aufzuweichen und auf Verzehrtemperatur zu bringen gleichzeitig aber auch der Speisegrundschicht die endgültige Verzehrtemperatur zu erteilen. Wenn hier von Verzehrtemperatur gesprochen wird, so ist damit auch diejenige Temperatur gemeint, welche die Speisen am Küchenausgang haben und die entsprechend der Dauer des jeweiligen Serviervorgangs auf eine angenehme Verzehrtemperatur absinkt.

Nach dieser kurzen Darstellung eines speziellen Ausführungsbeispiels zur Einführung in die Prinzipien der Erfindung sei nun zu den generellen Maßnahmen zurückgekehrt, die im Rahmen der eingangs beschriebenen Erfindung zusätzlich angewandt werden können.

Es ist möglich, dass eine bei Raumtemperatur in schichtbildungsfähigem Fließzustand vorliegende Speiseergänzungsmasse verwendet wird. Dies entspricht dem oben beschriebenen Einführungsbeispiel. Es ist aber auch möglich, dass eine durch Temperaturerhöhung in schichtbildungsfähigen Fließzustand überführbare Speiseergänzungsmasse verwendet wird.

Die Erwärmung der Speiseergänzungsmasse auf die Erweichungstemperatur kann, wie schon im Rahmen des Beispiels erwähnt, wenigstens zum Teil durch Wärmezufuhr von der Speisegrundschicht her erfolgen, wenn diese vorher erwärmt worden ist oder zufolge ihres Kochvorgangs noch erwärmt ist. Es ist aber auch möglich, dass die Erwärmung auf die Erweichungstemperatur wenigstens z.T. durch äußere Wärmezufuhr bewirkt wird.

Durch die äußere Wärmezufuhr kann gleichzeitig mit der Erwärmung der Speiseergänzungsschicht auf Erweichungstemperatur auch die Speisegrundschicht erwärmt werden. Damit wird der Möglichkeit Rechnung getragen, eine möglicherweise bereits abgekühlte oder teilsweise abgekühlte Speisegrundschicht während des Erweichens der Speiseergänzungsschicht wieder aufzuheizen. Es sei indes auf Folgendes hingewiesen:

Gerade im Großküchenbetrieb kommt es auf eine hohe Geschwindigkeit der Arbeitsabläufe an, um in der kurzen Zeit einer Mittagspause eine Vielzahl von Kantinengästen versorgen zu können. Es ist deshalb von wesentlicher Bedeutung, dass der Vorgang des Erweichens der Speiseergänzungsplatte von der üblichen Tiefkühltemperatur von ca. -18°C auf Erweichungstemperatur und darüber hinaus auf Verzehrtemperatur möglichst rasch vonstatten geht, und es soll nach Möglichkeit keine Verzögerung durch eine längere Aufheizperiode in Kauf genommen werden, die u. U. für eine sehr viel voluminösere Speisegrundschicht notwendig ist. Deshalb empfiehlt es sich, die Speisegrundschicht bzw. das zu ihrer Bildung einzusetzende Grundmaterial möglichst schon mit einer annähernd der Verzehrtemperatur entsprechenden Temperatur bereit zu stellen, wenn die Speiseergänzungsplatte aufgelegt wird, da dann keine zusätzliche Zeit benötigt wird, um die Speisegrundschicht auf Verzehrtemperatur bzw. Küchenausgangstemperatur zu bringen und da überdies durch die bereits erwärmte Speisegrundschicht Wärme an die Speiseergänzungsplatte abgegeben und somit deren Aufweichzeit verkürzt wird. Grundsätzlich gilt, dass im Zuge der Erwärmung der Speiseergänzungsschicht auf Erweichungstemperatur die Temperaturen beider Schichten auf Verzehrtemperatur eingestellt werden oder unter Berücksichtigung des Serviervorgangs auf eine entsprechende über der Verzehrtemperatur liegende Küchenausgangstemperatur gebracht werden.

Dem Gesichtspunkt der Zeitersparnis kann auch dadurch Rechnung getragen werden, dass ein Vorkochzustand der Speiseergänzungsmasse vor deren Tiefgefrieren und/oder ein Vorkochzustand der Speisegrundschicht vor dem Belegen derart eingestellt werden, dass der Verzehrkochzustand durch Erwärmen der jeweiligen Schicht auf Verzehrtemperatur bzw. Küchenausgangstemperatur ohne wesentliche zusätzliche Kochrast erreicht wird. Es sei hier angemerkt, dass der Verzehrkochzustand unterschieden wird von der Verzehrtemperatur. Der Verzehrkochzustand bezieht sich auf die strukturellen und chemischen Veränderungen des Kochguts, die Voraussetzung für den Verzehr sind, während sich die Verzehrtemperatur auf diejenige Temperatur bezieht, die den Speisewerkzeugen des Menschen angenehm ist.

Wenn eine Speisegrundschicht mit unregelmäßiger Oberfläche bereit gestellt wird, so kann durch die Erweichung der Speiseergänzungsplatte deren Anschmiegung an der Oberseite der Speisegrundschicht herbeigeführt werden. Dies bringt zum einen einen ästhetischen Vorteil. Zum anderen kann durch die Anschmiegung der Speiseergänzungsplatte auch nach deren Erweichen eine gewisse Stabilisierung der Speisegrundschicht erreicht werden, wenn diese etwa aufgrund überwiegend kleinkörniger Bestandteile und aufgrund des Fehlens von Bindemitteln zu einem Auseinanderfallen bei der Speiseausgabe bzw. beim Serviervorgang neigen sollte.

Ein weiterer wesentlicher Gesichtspunkt der Erfindung besteht darin, dass durch die Erwärmung der Speiseergänzungsschicht und der Speisegrundschichtauf Verzehrtemperatur bzw. Küchenausgangstemperatur eine solche Viskosität mindestens eines Bestandteils der Speiseergänzungsmasse und eine solche Permeabilität der Speisegrundschicht eingestellt werden, dass bei Erreichen der Verzehrtemperatur bzw. Küchenausgangstemperatur wenigstens ein Teil der Speiseergänzungsmasse in die Speisegrundschicht eingeflossen ist. Durch entsprechende Abstimmung der Bestandteile kann ein mehr oder minder großer Anteil der Speiseergänzungsmasse auf diese Weise ins Innere der Speisegrundschicht zu deren Geschmacksverbesserung und/oder Strukturverbesserung eingeleitet werden. Auch ist es möglich - wiederum durch entsprechende Abstimmung der Bestandteile - zu erreichen, dass an der Oberseite der fertigen Speise eine Konzentration an Festbestandteilen eintritt, die gegebenenfalls noch durch einen Rest des Soßenanteils oder sonstigen flüssigen Anteils miteinander verbunden oder überdeckt sind.

Für den Verfahrensablauf bei dem erfindungsgemäßen Verfahren ist es besonders vorteilhaft, wenn eine Speiseergänzungsmasse mit einem soßenartigen Bestandteil verwendet wird, der bei Raumtemperatur in einem schichtbildungsfähigen Fließzustand vorliegt, z.B. Béchamelsoße oder Tomatensoße. Dabei kann in dem soßenartigen Bestandteil bereits Käse als Mittel zur Geschmacksbeeinflussung und/oder zur Nährstofferhöhung gelöst oder fein dispergiert sein. Dies ist derjenige Käse, der - beispielsweise im Fall der Bechamelzubereitung - bereits während dieser Zubereitungsphase eingebracht wird und der nicht in stückiger Form erhalten bleiben soll, sondern eher gelöst oder dispergiert sein soll.

Andererseits sind von besonderem Interesse Speiseergänzungsmassen mit einem Gehalt an stückigen Bestandteilen, z. B. Gemüse-, Obst-, Speckstücken u. dgl., welche auch bei Erreichen der Verzehr- bzw. Küchenausgangstemperatur ihren stückigen Charakter wenigstens zum Teil beibehalten.

Eine Sondersituation liegt vor, wenn man Käse an der fertigen Speise in oberflächennaher Position sichtbar oder im Biss bemerkbar erscheinen lassen will. Man kann dann entweder den Käse, z. B. Gorgonzola oder Mozarella, in größeren Stücken so spät der Speiseergänzungsmasse zusetzen, dass diese bei Erreichen der Verzehr- bzw. Küchenausgangstemperatur wenigstens zum Teil erhalten bleiben. Weiterhin ist es möglich, Käsestücke von einem solchen Erweichungs- und Schmelzverhalten einzusetzen, dass sie sich in der Nähe der Verzehr- bzw. Küchenausgangstemperatur haut- oder netzartig über die Oberfläche der Speisegrundschicht verteilen und gewünschtenfalls eine gratinartige Konsistenz annehmen.

Die Vorgehensweise bei der erfindungsgemäßen Speisezubereitung kann noch dadurch erleichtert werden, dass die Speiseergänzungsplatten in einem dem Grundriss eines Kochgefäßes für die Speisegrundschicht angepassten Flächenformat bereit gestellt werden. Man braucht dann jeweils nur eine Platte zu handhaben, um in einem Kochgefäß die Speiseergänzungsschicht auf die Speisegrundschicht aufzubringen. Man macht von dieser Möglichkeit insbesondere in genormten modernen Küchen Gebrauch, in denen die so genannten "Gastronorm"-Geschirre und insbesondere Gefäße zur Verfügung stehen. Die Speiseergänzungsplatten bzw. die zu ihrer Herstellung dienenden Gefrierformen werden dann mit entsprechendem Grundrissformat hergestellt.

Denkbar ist aber auch, dass die Speiseergänzungsplatten in einem für Mosaikbelegung einer Speisegrundschicht geeigneten Flächenformat bereit gestellt werden. Die Speiseergänzungsplatten können dabei beispielsweise ein Format 4 x 4 cm im Grundriss haben. Solche Speiseergänzungsplatten können ebenfalls leicht auf eine Grundschicht aufgelegt werden, beispielsweise einfach durch Aufschütten, wenn eine variierende Dicke der Speiseergänzungssicht infolge von Überlappungen hingenommen wird. Speiseergänzungsplatten im Mosaikformat können geordnet gestapelt werden, aber auch als Haufwerk gelagert und versandt werden.

Hinsichtlich der Speisegrundschicht gilt große Variationsfreiheit: Es ist denkbar, dass eine Speisegrundschicht mit einem Gehalt an Kartoffelstücken und/oder Hülsenfrüchten und/oder Nudeln und/oder Reis und/oder Gemüsestücken und/oder Fleischstücken und/oder Fischstücken verwendet wird.

Die Speiseergänzungsschicht kann auch dazu herangezogen werden, eine Bindung der Bestandteile der darunter liegenden Speisegrundschicht herbei zu führen, so dass - wenn ein solcher Bindungszustand nicht schon als Folge vorangehenden Kochvorgangs gegeben ist- durch das Eindringen von Bestandteilen der Speiseergänzungsschicht eine das Portionieren und Servieren erleichternde Struktur erreicht wird.

Es ist selbstverständlich denkbar, dass in einer Großküche die Speiseergänzungsplatten an Ort und Stelle hergestellt werden, so wie weiter oben beispielhaft beschrieben. Ein besonderer Vorteil liegt aber darin, dass die Speiseergänzungsplatten in einem Zulieferbetrieb mit entsprechenden Kühleinrichtungen vorgefertigt werden und in verarbeitungsfertigem Zustand an den Ort der Großküche geliefert werden können. So ist es möglich, dass die Speiseergänzungsplatten zum Küchenbetrieb in Stapeln oder Haufwerksform mit einer Temperatur von ca. -18°C angeliefert werden und dort - gewünschtenfalls nach Zwischenlagerung in einem Tieftemperaturraum - zum Belegen von Speisegrundschichten verwendet werden. Beim Herstellen einer Speiseergänzungsplatte kann beisielsweise wie folgt vorgegangen werden:
a) Herstellung einer Soße erhöhter Temperatur;
b) Einarbeiten der stückigen Bestandteile bei erhöhter Temperatur, soweit diese stückigen Bestandteile einer Kochbehandlung oder einer Restkochbehandlung bedürfen und/oder qualitätsunempfindlich gegenüber der erhöhten Temperatur sind und/oder gelöst und/oder dispergiert werden sollen;
c) Abkühlen der Soße;
d) Zugabe von temperaturempfindlichen stückigen Bestandteilen;
e) Abfüllen in Gefrierformen;
f) Schichtbildung;
g) Tiefgefrieren;
h) Verpacken in Karton, Isolierpackungen und/oder in Kühlräume oder Kühlwägen.

Die Entnahme der Speiseergänzungsplatten aus den Gefrierformen kann vor dem Verpacken oder am Verwendungsort erfolgen. Bevorzugt ist das Entformen gleich nach der Herstellung der Platten und vor dem Verpacken, weil dann an teuren Gefrierformen eingespart wird und das Transportgewicht reduziert wird. Trotz dem vorzeitigen Entformen besteht keine Gefahr eines vorzeitigen Abriebs, insbesondere dann nicht, wenn die Gefrierformen vor dem Befüllen mit Trennfolien oder Trennpapier ausgelegt werden. Diese Trennfolien können nämlich nach der Entnahme aus den Plattenformen an den Speiseergänzungsplatten belassen werden, vorzugsweise bis kurz vor dem Auflegen. Sie bilden dann sozusagen eine schützende Trennschicht zwischen im Stapel aufeinander folgenden Speiseergänzungsplatten.

Weitere Verfahrensmerkmale der Erfindung ergeben sich aus den Ansprüchen 2 bis 27.

Bei dem erfindungsgemäßen Verfahren kann ein tiefgefrorenes Speiseergänzungsmaterial in Platten- oder Pelletform eingesetzt werden mit einem nach Erweichen soßenförmigen Bestandteil in Form einer wässrigen Lösung oder Suspension, wie Béchamelsoße oder Tomatensoße.

Eine tiefgefrorene Speiseergänzungsplattekann als handelsfähige Einheitvorliegen. Dabei können alle Bestandteile in der Platte enthalten sein, die vorstehend erwähnt wurden.

Die tiefgefrorenen Speiseergänzungsplatten können gegebenenfalls durch Trennfolien voneinander getrennt und gewünschtenfalls in einem Karton, Isolierbehälter oder in einem Kühlbehälter verpackte sein.

Die bei dem erfindugsgemäßen Verfahren eingesetzten Platten können als Haufwerk von tiefgefrorenen Speiseergänzungsplatten im Kleinformatvorliegen, die wiederum in einem Karton, Beutel oder Isolierbehälter aufgenommen sein können.

Die Hersteller von tiefgefrorenen Lebensmitteln sind mit Anlagen ausgerüstet, die die Kühlung auf Temperaturen von -18°C ohne weiteres erlauben und auch mit Speicherräumen, in denen die tiefgefrorenen Speiseergänzungsplatten bis zum Bedarfszeitpunkt aufbewahrt werden können und schließlich auch mit Kühlwägen, in denen die tiefgefrorenen Speiseergänzungsplatten zum jeweiligen Verwendungsort transportiert werden können. Am Verwendungsort, insbesondere in Großküchen, stehen Zwischenlager zur Verfügung, in denen die ankommenden Speiseergänzungsplatten bis zur Bereitung des jeweiligen Gerichts aufbewahrt werden können.

Durch entsprechende Zusätze zu der Speiseergänzungsmasse kann deren Verhalten im Zustand der Endbereitung des jeweiligen Gerichts bestimmt werden. So ist es möglich, durch Zusatz von Mehl oder anderen Stärkeprodukten oder durch gratinierenden Käse die Platte beim Weichwerden auf einer relativ hohen Zähigkeit zu halten, so dass eine vollständige Überdeckung erhalten bleibt, auch wenn durch die Art der Speisegrundschicht, z. B. Fleisch- oder Fischstücke, eine große Zerreißbelastung auf die Speiseergänzungsschicht beim Anschmiegen an den unregelmäßigen Oberflächenverlauf eintritt.

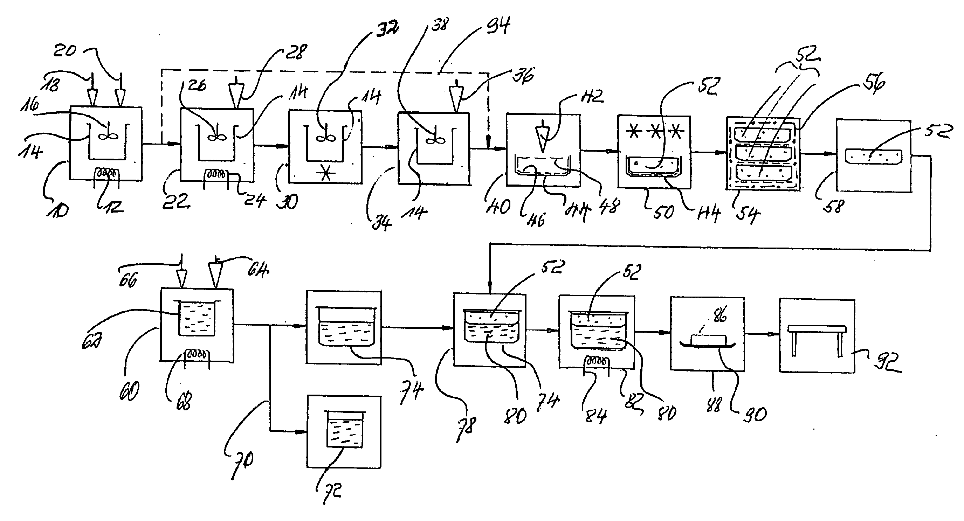

Die beiliegende Figur erläutert ein Funktionsschema eines erfindungsgemäßen Verfahrens und eine dazugehörige Anlage.

In einer Soßenzubereitungsstation 10 mit einer Heizung 12 erkennt man ein Soßenzubereitungsgefäß 14 mit einem Rührwerk 16. Durch Einfüllschächte 18 und 20 werden die Grundbestandteile einer Soße, z. B. Mehl, Fett, zerkleinerter Käse, Wasser, Milch, in das Soßenzubereitungsgefäß 14 eingefüllt. Dann wird unter gleichzeitigem Rühren aufgeheizt und nach einer Aufheiz- und Verweilzeit eine flüssige Masse von z. B. 80°C erhalten. Das Soßenzubereitungsgefäß 14 wird dann in eine Station 22 weiter transportiert, die wiederum mit einer Heizung 24, einem Rührwerk 26 und einem Einfüllschacht 28 für die Zuführung von stückigen Bestandteilen, z. B. Gemüsestücken oder Speckwürfeln, versehen ist. Hier wird unter Aufrechterhaltung der vorher erreichten Temperatur die Zugabe und Zumischung dieser stückigen Bestandteile vollzogen, wobei davon ausgegangen wird, dass die stückigen Bestandteile eine Struktur und ein physikalisches Verhalten besitzen, dass sie auch nach dem Untermischen in ihrer Form im Wesentlichen erhalten bleiben.

Es ist darauf hinzuweisen - dies gilt auch für alle weiteren Stationen -, dass die Stationen 10 und 22 auch zu einer einzigen Station vereinigt sein können, in der nacheinander die verschiedenen Zuführvorgänge stattfinden. Weiterhin ist es denkbar, dass die Zuführung der einzelnen Komponenten in einem kontinuierlichen Verfahren stattfindet, wobei einem Strom von sich nach und nach zur Soße entwickelnden Grundbestandteilen die stückigen Zuschlagstoffe zugeführt und die Temperaturänderungen vorgenommen werden können.

In einer Abkühlstation 30 wird das Soßenzubereitungsgefäß 14 mit seinem Inhaltabgekühlt, gewünschtenfalls unter gleichzeitigem Rühren mittels eines Rührwerks 32. Dabei wird eine Temperatur von beispielsweise 30°C erreicht. Es sei angenommen, dass bei dieser Temperatur die Soße derart viskos ist, dass sie sich unter der Schwerkraft zu einer annähernd gleichmäßig dicken Schicht ausbreitet, wenn sie auf eine Unterlage oder in ein Flachgefäß eingeschüttet wird.

In einer Käseeinfüllstation 34 werden sodann durch einen Einfüllschacht 36 Käsestückchen, z. B. in Würfelform, von 0,5 x 0,5 x 0,5 cm Kantenlänge in das Soßenzubereitungsgefäß 14 eingeschüttet und durch ein Rührwerk 38 in die soweit entstandene Soße eingemischt. Bei der hier herrschenden Temperatur von ca. 30°C bleiben die Käsestückchen ohne Anschmelzen im Wesentlichen in ihrer Form erhalten.

Die soweit vorbereitete Soße wird dann in einer Abfüllstation 40 durch einen Pumpenausfluss 42 in eine Gefrierform 44 eingeleitet, nachdem in diese Gefrierform 44 vorher eine Trennfolie 46 eingelegt worden ist. In der Gefrierform 44 breitet sich die leicht flüssige Soße aufgrund Schwerkraft zu einer Schicht 48 aus, wobei die Schichtbildung gegebenfalls durch einen Streichvorgang unterstützt werden kann.

Nach dem Befüllen werden die einzelnen Gefrierformen 44 in eine Gefrierstation 50 versetzt, in welcher die Soße auf ca. -18°C abgekühlt und dadurch zu einer starren Speiseergänzungsplatte 52 von beispielsweise ca. 30 cm x ca. 50 cm Grundrissformat und einer Dicke von 2 cm ausgehärtet werden. In einer Formentnahme- und Verpackungsstation 54 werden die Speiseergänzungsplatten 52 sodann aus ihren jeweiligen Gefrierformen 44 entnommen und unter Belassung der Trennfolien 46 an den jeweiligen Speiseergänzungsplatten 52 gestapelt. Dieser Stapel kann dann in einem Karton oder einem Isolierbehälter 56 oder einem mit Transportkühlung ausgerüsteten Transportwagen zu einer Entpackungs- und Vereinzelungsstation 58 geführt werden, die beispielsweise in einer Großküche installiert ist.

In der Großküche wird in einer Temperaturkammer, etwa eines Herds 60, in einem weiteren Kochgefäß 62 eine Nudelmasse gekocht. Hierzu werden die Nudeln durch einen Einfüllschacht 64 in das Kochgefäß 62 geschüttet. Durch einen weiteren Einfüllschacht 66 können die übrigen Bestandteile, z.B. Wasser, Fett, Salz, Gewürze, zugeführt werden. Durch eine Heizung werden die Nudeln anschließend im Wesentlichen gargekocht. Ein Teil der gargekochten Nudeln wird durch eine Abzweigungsleitung 70 in ein Warmhaltegefäß 72 eingefüllt, aus dem beispielsweise in Form von Beilagenportionen Fleischgerichte garniert werden können. Ein anderer Teil der Nudeln gelangt in ein Speisezubereitungsgefäß 74, wiederum beispielsweise in Gastronormformat und wird dort in einer Schichtdicke angeordnet, die der gewünschten Schichtdicke der Nudeln im fertigen Gericht entspricht, unter Berücksichtigung einer etwaigen Setzung.

Das Speisezubereitungsgefäß 74 gelangt sodann in eine Belegungsstation 78, in der jeweils auf eine aus Nudeln gebildete Speisegrundschicht 80 eine Speiseergänzungsplatte 52 aufgelegt wird. Der Grundriss des Speisezubereitungsgefäßes 74 ist dabei dem Grundriss der Speiseergänzungsplatten 52 angepasst, so dass die Speisegrundschicht 80 im Wesentlichen auf ihrer ganzen Oberfläche belegt wird. Der so gebildete Mehrschichtenaufbau wird sodann in einen Ofen 82 eingeführt, wo durch eine von außen gespeiste Wärmequelle 84 und/oder die in der Nudelgrundschicht 80 gespeicherte Wärme die Speiseergänzungsplatte 52 aufgetaut wird. Der Erwärmungsprozess in dem Ofen 82 wird so gewählt, dass die beiden Schichten 80 und 52 auf Verzehrtemperatur oder eine leicht über der Verzehrtemperatur liegende Küchenausgangstemperatur gebracht werden. Die Dauer der Erwärmung in dem Ofen 82 wird so eingestellt, dass etwaige Defizite in der Kochzeit, die zu einem Verzehrzustand noch fehlen, ausgeglichen werden. Damit ist die Speise verzehrfertig. Es werden einzelne Portionen in einer Ausgabestation 88 auf Teller 90 gelegt und schließlich in einem Speiseraum 92 serviert.

Die Umgehung 94 über die Stationen 22, 30 und 34 hinweg soll andeuten, dass all diese Stationen 22, 30 und 34 oder ein Teil davon auch weggelassen werden können.

Es ist möglich, dass die Platten nach dem Tiefgefrieren in entsprechend angepasste Beutel eingegeben werden, um sie auf diese Weise steril bis zum Verwendungsort bringen zu können. Die Beutel können dabei natürlich auch an die Gastronormformate der Platten und damit an die Kochgefäße angepasst werden, in denen die Speisegrundschicht mit der Ergänzungsplatte erwärmt wird.

Die Zusammensetzung der Speiseergänzungsmasse kann beispielsweise wie folgt sein:
70 Gew.% Soße
20 Gew.% Gemüse- oder Fleischstückchen
10 Gew.% Käsestückchen

Das soweit beschriebene Verfahren kann in verschiedener Hinsicht abgewandelt werden. So ist es z.B. möglich, die Soße im schichtbildungsfähigen Fließzustand in Flachbeutel einzufüllen und in diesen Flachbeuteln auszubreiten und dann tiefzufrieren, wobei der Flachbeutel entweder die Funktion der Gefrierform übernehmen kann oder zusätzlich zu der Gefrierform verwendet wird, indem der befüllte und abgeschlossene Flachbeutel in die Gefrierform eingelegt wird. Der Flachbeutel kann dann bis kurz vor dem Auflegen der Speiseergänzungsplatte an dieser verbleiben und erst zu diesem Zeitpunkt ggf. nach vorherigem Antauen durch Eintauchen in warmes Wasser von der Speiseergänzungsplatte gelöst werden. Der Flachbeutel übernimmt damit eine zusätzliche Verpackungsfunktion, so dass die Sterilität bis zur Verwendung gewährleistet bleibt, auch wenn die Platten ohne zusätzliche Verpackung beispielsweise in einen Transportwagen oder ein Großgebinde geschichtet werden.

Soll die Schichtbildung im Beutel ohne zusätzliche Form erfolgen und in dem Beutel dann auch der Gefriervorgang durchgeführt werden, so kann die Größe des Beutels selbstverständlich auch an die Gastronormgröße der Platten bzw. der die Speisegrundschicht aufnehmenden Gefäße angepasst werden.

Eine grundsätzliche Abwandlung ist auch in der Form möglich, dass die Speiseergänzungsmasse zu rieselfähigen oder streufähigen Pellets tiefgefroren wird. Dabei besteht einerseits die Möglichkeit, die gesamte Speiseergänzungsmasse unter Einschluss der stückigen Bestandteile zu Pellets tiefzugefrieren. Dies gilt insbesondere dann, wenn die stückigen Bestandteile relativ klein sind. Für den Fall, dass man größere stückige Bestandteile zum Einsatz bringen will, ist es auch denkbar, dass man lediglich den soßenförmigen Bestandteil zu Pellets ausformt und tiefgefriert und diesen Pellets die ebenfalls tiefgefrorenen stückigen Bestandteile und ggf. Käsestückchen, diese ebenfalls in tiefgefrorenem Zustand, beimischt, so dass man eine streufähige Masse erhält, die dann auf die Speisegrundschicht aufgestreut und durch das Aufstreuen oder durch einen nachfolgenden Verteilvorgang verteilt werden kann. Die gewünschte Schichtdicke wird dann durch das Aufstreuen bzw. das nachträgliche Verteilen eingestellt. Man kann auch daran denken, kleinere stückige Bestandteile in die zu Pellets zu verarbeitende Soße einzuarbeiten und nur größere stückige Bestandteile als gesonderte Bestandteile außerhalb der Pellets diesen zuzumischen.

Auch im Falle der Pellet-Lösung ist es denkbar, diese, gewünschtenfalls zusammen mit den stückigen Bestandteilen, in Beutel abzufüllen, so dass am Verwendungsort, d.h. bei der Beschichtung der Speisegrundschicht, der jeweilige Beutel aufgerissen und über die Speisegrundschicht gestreut werden kann. Dabei empfiehlt es sich, die Portionen in den einzelnen Beuteln so zu normieren, dass diese an die Gastronormgefäße angepasst sind, in denen die Speisegrundschicht bereitgestellt wird.

Die Pellet-Lösung ist im Großküchenbetrieb verwendbar. Sie ist aber insbesondere auch im Haushalt anwendbar. Dabei besteht die Möglichkeit, die Schichtdicke der Speiseergänzungsschicht durch entsprechende Wahl des aufzustreuenden Pelletgewichts zu variieren und die in einer Packung dann etwa übrigbleibenden Pellets zur Verwendung bei weiterer Gelegenheit in einem Tiefkühlfach oder einer Kühltruhe aufzubewahren.

Die Zusammensetzung der Speiseergänzungsmasse im Falle der Pellet-Lösung kann wiederum beispielsweise wie folgt sein:
70 Gew.% Soße
20 Gew.% Gemüse- oder Fleischstückchen
10 Gew.% Käsestückchen

## Patentansprüche

1. Verfahren zur Speisezubereitung, bei dem auf eine aus einer Speisegrundmasse bestehende Speisegrundschicht (80) eine Speiseergänzungsschicht (52) aufgebracht wird, umfassend die Maßnahmen:
a) Bereitstellen des Materials für die Speiseergänzungsschicht (52) vor dem Aufbringen auf die Speisegrundschicht (80) durch:
- Ausbreiten einer Speiseergänzungsmasse in einem schichtbildungsfähigen Fließzustand in Schichtform mit einer einer Mindestauftragsdicke entsprechenden Schichtdicke und dann Tieffrieren zu einer im Wesentlichen starren, handhabbaren Speiseergänzungsplatte (52),
oder
- Ausformen der Speiseergänzungsmasse in einem pelletbildungsfähigen Zustand zu zunächst noch weichen Pellets und dann Tieffrieren zu im Wesentlichen starren Speiseergänzungspellets,
b) Bringen einer körnigen oder/und stückige Bestandteile enthaltenden Speisegrundschicht (80) in einen Verzehrkochzustand,
c) nach der Maßnahme b), Aufbringen des im Schritt a) bereitgestellten Materials für die Speiseergänzungsschicht (52) auf die in der Maßnahme b) vorbereitete Speisegrundschicht (80) in einem tiefgefrorenen Zustand,
d) Erwärmen des im Schritt c) auf die vorbereitete Speisegrundschicht (80) aufgebrachten Materials für die Speiseergänzungsschicht (52) auf Verzehrtemperatur oder/und Küchenausgangstemperatur, so dass zumindest ein Bestandteil des Materials der Speiseergänzungsschicht (52) auf eine ein Einfließen dieses Bestandteils in die kömige oder/und stückige Struktur der Speisegrundschicht (80) zulassende Viskosität gebracht wird.

2. Verfahren nach Anspruch 1,
**dadurch gekennzeichnet,**
**dass** eine bei Raumtemperatur in schichtbildungsfähigem Fließzustand vorliegende Speiseergänzungsmasse verwendet wird.

3. Verfahren nach Anspruch 1,
**dadurch gekennzeichnet,**
**dass** eine durch Temperaturerhöhung in schichtbildungsfähigen Fließzustand überführbare Speiseergänzungsmasse verwendet wird.

4. Verfahren nach einem der Ansprüche 1 - 3,
**dadurch gekennzeichnet,**
**dass** die Erwärmung der Speiseergänzungsschicht (52) auf die Erweichungstemperatur wenigstens z.T. durch Wärmezufuhr von der Speisegrundschicht (80) her bewirkt wird.

5. Verfahren nach einem der Ansprüche 1 - 4,
**dadurch gekennzeichnet,**
**dass** die Erwärmung auf die Erweichungstemperatur wenigstens z.T. durch äußere Wärmezufuhr (84) bewirkt wird.

6. Verfahren nach einem der Ansprüche 1 - 5,
**dadurch gekennzeichnet,**
**dass** durch äußere Wärmezufuhr (84) gleichzeitig mit der Erwärmung der Speiseergänzungsschicht (52) auf Erweichungstemperatur auch die Speisegrundschicht (80) erwärmt wird.

7. Verfahren nach einem der Ansprüche 1 - 6,
**dadurch gekennzeichnet,**
**dass** im Zuge der Erwärmung der Speiseergänzungsschicht (52) auf Erweichungstemperatur die Temperaturen beider Schichten (52,80) unter Berücksichtigung des Serviervorgangs auf eine entsprechende über der Verzehrtemperatur liegende Küchenausgangstemperatur gebracht werden.

8. Verfahren nach einem der Ansprüche 1 - 7,
**dadurch gekennzeichnet,**
**dass** ein Vorkochzustand der Speiseergänzungsmasse vor deren Tiefgefrieren und/oder ein Vorkochzustand der Speisegrundschicht (80) vor dem Belegen derart eingestellt werden, dass der Verzehrkochzustand durch Erwärmen der jeweiligen Schicht auf Verzehrtemperatur bzw. Küchenausgangstemperatur ohne wesentliche zusätzliche Kochrast erreicht wird.

9. Verfahren nach einem der Ansprüche 1 - 8,
**dadurch gekennzeichnet,**
**dass** eine Speisegrundschicht (80) mit unregelmäßiger Oberfläche bereitgestellt wird und dass durch die Erweichung der Speiseergänzungsplatte (52) deren Anschmiegung an die Oberseite der Speisegrundschicht (80) herbeigeführt wird.

10. Verfahren nach einem der Ansprüche 1 - 9,
**dadurch gekennzeichnet,**
**dass** durch die Erwärmung der Speiseergänzungsschicht (52) und der Speisegrundschicht (80) auf Verzehrtemperatur bzw. Küchenausgangstemperatur eine solche Viskosität mindestens eines Bestandteils der Speiseergänzungsmasse und eine solche Permeabilität der Speisegrundschicht (80) eingestellt werden, dass bei Erreichen der Verzehrtemperatur bzw. Küchenausgangstemperatur wenigstens ein Teil der Speiseergänzungsmasse in die Speisegrundschicht (80) eingeflossen ist.

11. Verfahren nach einem der Ansprüche 1 - 10,
**dadurch gekennzeichnet,**
**dass** eine Speiseergänzungsmasse mit einem soßenartigen Bestandteil, insbesondere in Form einer wässrigen Lösung oder Suspension, verwendet wird, der bei Raumtemperatur in einem schichtbildungsfähigen Fließzustand vorliegt, z.B. Bechamelsoße oder Tomatensoße.

12. Verfahren nach einem der Ansprüche 1 - 11,
**dadurch gekennzeichnet,**
**dass** eine Speiseergänzungsmasse mit soßenartigem Bestandteil verwendet wird, welcher Käse in gelöstem oder fein dispergiertem Zustand enthält.

13. Verfahren nach einem der Ansprüche 1 - 12,
**dadurch gekennzeichnet,**
**dass** eine Speiseergänzungsmasse mit einem Gehalt an stückigen Bestandteilen, z.B. Gemüse-, Obst-, Speckstücken, verwendet wird, welche auch bei Erreichen der Verzehr- bzw. Küchenausgangstemperatur ihren stückigen Charakter wenigstens zum Teil beibehalten.

14. Verfahren nach einem der Ansprüche 1 - 13,
**dadurch gekennzeichnet,**
**dass** eine Speiseergänzungsmasse verwendet wird, welche stückige Bestandteile von solchem Erweichungs- und Schmelzverhalten, z.B. Käse, enthält, dass sie sich nahe der Verzehrtemperatur bzw. Küchenausgangstemperatur haut- oder netzartig über die Oberfläche der Speisegrundschicht (80) verteilen und gewünschtenfalls gratinartige Konsistenz annehmen.

15. Verfahren nach einem der Ansprüche 1 - 14,
**dadurch gekennzeichnet,**
**dass** die Speiseergänzungsplatten (52) in einem dem Grundriss eines Kochgefäßes (74) für die Speisegrundschicht (80) angepassten Flächenformat bereit gestellt werden.

16. Verfahren nach einem der Ansprüche 1 - 14,
**dadurch gekennzeichnet,**
**dass** die Speiseergänzungsplatten in einem für Mosaikbelegung einer Speisegrundschicht geeigneten Flächenformat bereit gestellt werden.

17. Verfahren nach einem der Ansprüche 1 - 16,
**dadurch gekennzeichnet,**
**dass** eine Speisegrundschicht (80) mit einem Gehalt an Kartoffelstücken und/oder Hülsenfrüchten und/oder Nudeln und/oder Reis und/oder Gemüsestücken und/oder Fleischstücken und/oder Fischstücken verwendet wird.

18. Verfahren nach einem der Ansprüche 1 - 17,
**dadurch gekennzeichnet,**
**dass** eine Speiseergänzungsmasse mit Bestandteilen verwendet wird, welche nach Erweichung und Eindringen in die Speisegrundschicht (80) eine stabilisierende Verbindung zwischen körnigen und/oder stückigen Bestandteilen der Speisegrundschicht bewirken können, z.B. Käse, Mehl, Stärke, Ei und Molkenproteine.

19. Verfahren nach einem der Ansprüche 1 - 18,
**dadurch gekennzeichnet,**
**dass** die Speiseergänzungsplatten (52) zum Küchenbetrieb in Stapeln oder Haufwerksform mit einer Temperatur von ca. -18°C angeliefert werden und dort - gewünschtenfalls nach Zwischenlagerung in einem Tieftemperaturraum - zum Belegen von Speisegrundschichten (80) verwendet werden.

20. Verfahren nach einem der Ansprüche 1 - 19,
**dadurch gekennzeichnet,**
**dass** die Speisegrundschicht (80) im Küchenbetrieb von Beilagematerial zu anderen im Küchenbetrieb hergestellten Grundschichten abgezweigt wird.

21. Verfahren nach einem der Ansprüche 1 - 20,
**dadurch gekennzeichnet,**
**dass** die Herstellung der Speiseergänzungsplatten (52) wie folgt abläuft:
a) Herstellung einer Soße erhöhter Temperatur;
b) Einarbeiten der stückigen Bestandteile bei erhöhter Temperatur, soweit diese stückigen Bestandteile einer Kochbehandlung oder einer Restkochbehandlung bedürfen und/oder qualitätsunempfindlich gegenüber der erhöhten Temperatur sind und/oder gelöst und/oder dispergiert werden sollen;
c) Abkühlen der Soße;
d) Zugabe von temperaturempfindlichen stückigen Bestandteilen;
e) Abfüllen in Gefrierformen (44) oder formgebende Beutel;
f) Schichtbildung;
g) Tiefgefrieren;
h) Verpacken in Kartons und/oder Beutel und/oder Isolierpackungen (56) und/oder in Kühlräume und/oder in Kühlwägen.

22. Verfahren nach Anspruch 21,
**dadurch gekennzeichnet,**
**dass** die Entnahme aus den Gefrierformen (44) vor dem Verpacken oder am Verwendungsort erfolgt.

23. Verfahren nach einem der Ansprüche 21 - 22,
**dadurch gekennzeichnet,**
**dass** die Gefrierformen (44) vor dem Befüllen mit Trennfolien (46) oder Trennpapier ausgelegt werden.

24. Verfahren nach Anspruch 23,
**dadurch gekennzeichnet,**
**dass** die Trennfolien (46) nach der Entnahme aus den Gefrierformen (44) an den Speiseergänzungsplatten (52) belassen werden, vorzugsweise bis kurz vor dem Auflegen.

25. Verfahren nach einem der Ansprüche 1-14, 17, 18 und 20
**dadurch gekennzeichnet,**
**dass** die Pellets mit einem Gehalt an stückigen Bestandteilen ausgeformt und tiefgefroren werden.

26. Verfahren nach Anspruch 25,
**dadurch gekennzeichnet,**
**dass** die tiefgefrorenen Pellets mit gesondert tiefgefrorenen stückigen Bestandteilen zu einem streu- oder rieselfähigem Gemisch zusammengegeben und dieses auf die Speisegrundmasse aufgestreut und ggf. verteilt wird.

27. Verfahren nach Anspruch 1 oder 25,
**dadurch gekennzeichnet,**
**dass** die tiefgefrorenen Pellets und stückige Bestandteile nacheinander in gesonderten Streuvorgängen auf die Speisegrundmasse aufgebracht werden.

## Claims

1. A process for the preparation of food, in which a food supplement layer (52) is applied to an edible base layer (80) consisting of an edible base, comprising the steps:
a) preparing the material for the food supplement layer (52) before applying the edible base layer (80) by:
- spreading a food supplement composition in a layer-forming fluid state in layer form with a layer thickness corresponding to a minimum application thickness and then deep-freezing to a substantially rigid, manageable food supplement slab (52),
or
- forming the food supplement composition in a pellet-forming state to form initially soft pellets and then deep-freezing to form substantially rigid food supplement pellets,
b) bringing an edible base layer (80) containing granular and/or lumpy ingredients into a consumable cooking state,
c) after step b), applying the material prepared in step a) for the food supplement layer (52) on to the edible base layer (80) prepared in step b) in a deep-frozen state,
d) heating the material applied in step c) on to the prepared edible base layer (80) for the food supplement layer (52) to consumption temperature and/or start of cooking temperature so that at least one ingredient of the material of the food supplement layer (52) is brought to a viscosity enabling this ingredient to follow into the granular and/or lumpy structure of the edible base layer (80).

2. A process according to Claim 1, **characterised in that** a food supplement composition is used which at room temperature is present in a fluid state able to form layers.

3. A process according to Claim 1, **characterised in that** a food supplement composition is used which can be transformed by temperature increase into a layer-forming fluid state.

4. A process according to any one of Claims 1 to 3, **characterised in that** the heating of the food supplement layer (52) is carried out to the softening temperature at least partly by heat input from the edible base layer (80).

5. A process according to any one of Claims 1 to 4, **characterised in that** the heating to the softening temperature is carried out at least partly by external heat input (84).

6. A process according to any one of Claims 1 to 5, **characterised in that** the edible base layer (80) is also heated to softening temperature by external heat input (84) simultaneously with the heating of the food supplement layer (52) .

7. A process according to any one Claims 1 to 6, **characterised in that** in the course of heating the food supplement layer (52) to softening temperature the temperatures of both layers (52,80), taking into consideration the serving procedure, are brought to an appropriate start of cooking temperature lying above the consumption temperature

8. A process according to any one Claims 1 to 7, **characterised in that** a precooking state of the food supplement composition, before it is deep-frozen, and/or a precooking state of the edible base layer (80), before being covered, is adjusted in such a way that the consumable cooking state is attained by heating the respective layer to consumption temperature or start of cooking temperature without substantial additional cooking rest.

9. A process according to any one Claims 1 to 8, **characterised in that** an edible base layer (80) with an irregular surface is prepared, and **in that** softening of the food supplement slab (52) contributes to its adherence to the upper side of the edible base layer (80).

10. A process according to any one Claims 1 to 9, **characterised in that** by heating the food supplement layer (52) and the edible base layer (80) to consumption temperature or start of cooking temperature it is possible to set a viscosity of at least one ingredient of the food supplement composition and a permeability of the edible base layer (80) such that upon reaching the consumption temperature or start of cooking temperature at least part of the food supplement composition flows into the edible base layer (80).

11. A process according to any one of Claims 1 to 10, **characterised in that** a food supplement composition is used with a sauce-like ingredient, particularly in the form of an aqueous solution or suspension, which at room temperature is present in a layer-forming fluid state, for example bechamel sauce or tomato sauce.

12. A process according to any one of Claims 1 to 11, **characterised in that** a food supplement composition is used with a sauce-like ingredient which contains cheese in a dissolved or finely dispersed state.

13. A process according to any one of Claims 1 to 12, **characterised in that** a food supplement composition is used with a content of lumpy ingredients, for example vegetable pieces, fruit pieces, bacon pieces, which at least partly retain their lumpy nature even upon reaching the consumption or start of cooking temperature.

14. A process according to any one of Claims 1 to 13, **characterised in that** a food supplement composition is used which contains lumpy ingredients which has such softening and melting behaviour, for example cheese, that near the consumption temperature or start of cooking temperature they spread out in the manner of a skin or lattice over the surface of the edible base layer (80) and, if desired, assume gratin-like consistency.

15. A process according to any one of Claims 1 to 14, **characterised in that** the food supplement slabs (52) are prepared in a planar format adapted to the cross-section of a cooking vessel (74) for the edible base layer (80).

16. A process according to any one of Claims 1 to 14, **characterised in that** the food supplement slabs are prepared in a planar format suitable for the mosaic covering of an edible base layer.

17. A process according to any one of Claims 1 to 16, **characterised in that** an edible base layer (80) is used with a content of potato pieces and/or pulses and/or pasta and/or rice and/or vegetable pieces and/or meat pieces and/or fish pieces.

18. A process according to any one of Claims 1 to 17, **characterised in that** a food supplement composition is used with ingredients which, after softening and penetration into the edible base layer (80), can bring about a stabilising connection between granular and/or lumpy ingredients of the edible base layer, for example cheese, flour, starch, egg and whey proteins.

19. A process according to any one of Claims 1 to 18, **characterised in that** the food supplement slabs (52) are delivered to the kitchen operation in stacks or in the form of blocks at a temperature of approximately -18°C and where, if desired after interim storage in a low-temperature store, they are used for covering edible base layers (80).

20. A process according to any one of Claims 1 to 19, **characterised in that** in the kitchen operation the edible base layer (80) is set aside from accompaniment material to form other base layers produced in the kitchen operation.

21. A process according to any one of Claims 1 to 20, **characterised in that** the production of the food supplement slabs (52) proceeds as follows:
a) preparation of a sauce at high temperature;
b) incorporating the lumpy ingredients at high temperature if these lumpy ingredients require cooking treatment or residual cooking treatment and/or the quality of which is insensitive to the high temperature and/or are to be dissolved and/or dispersed;
c) cooling the sauce;
d) adding temperature-sensitive lumpy ingredients;
e) transferring into freezing moulds (44) or shape-imparting bags;
f) layer forming;
g) deep-freezing;
h) packaging in cartons and/or bags and/or insulating packagings (56) and/or in cold stores and/or refrigerated trucks.

22. A process according to Claim 21, **characterised in that** the removal from the freezing moulds (44) is carried out before packaging or at the place of use.

23. A process according to any one of Claims 21 to 22, **characterised in that** the freezing moulds (44) are lined with separating sheets (46) or separating paper.

24. A process according to Claim 23, **characterised in that** after removal from the freezing moulds (44) the separating sheets (46) are left on the food supplement slabs (52), preferably until shortly before being applied.

25. A process according to any one of Claims 1 to 14,17,18 and 20, **characterised in that** the pellets with a content of lumpy ingredients are formed and deep-frozen.

26. A process according to Claim 25, **characterised in that** the deep-frozen pellets with separately deep-frozen lumpy ingredients are mixed together to form a spreadable or free-flowing mixture and the latter is spread and, optionally, dispersed on to the edible base composition.

27. A process according to Claims 1 or 25, **characterised in that** the deep-frozen pellets and lumpy ingredients are applied successively in separate spreading procedures on to the edible base composition.

## Revendications

1. Procédé de préparation d'un aliment, dans lequel on applique sur une couche de base alimentaire (80) consistant en une masse de base alimentaire une couche d'aliment complémentaire (52), comprenant les opérations de :
a) préparation du matériau pour la couche d'aliment complémentaire (52) avant l'application sur la couche de base alimentaire (80) en :
- étalant une masse d'aliment complémentaire en état d'écoulement approprié pour la formation de couches sous la forme d'une couche, présentant une épaisseur de couche correspondant à une épaisseur minimale d'application, puis en la surgelant sous la forme d'une plaque d'aliment complémentaire (52) essentiellement rigide et maniable,
ou
- en transformant la masse d'aliment complémentaire en état approprié pour produire des granulés, en granulés encore plus malléables par la suite, puis en les surgelant sous la forme de granulés d'aliment complémentaire essentiellement rigides,
b) soumission d'une couche de base alimentaire (80) contenant des éléments en grains et/ou en morceaux à un état de cuisson propre à la consommation,
c) après l'opération b), application du matériau préparé à l'étape a) pour la couche d'aliment complémentaire (52) sur la couche de base (80) préparée à l'opération b) en état surgelé,
d) réchauffement du matériau pour la couche d'aliment complémentaire (52) appliqué à l'étape c) sur la couche de base préparée pour atteindre la température de consommation ou/et la température de sortie des cuisines, de manière à ce qu'au moins une partie du matériau de la couche d'aliment complémentaire (52) atteigne une viscosité permettant une infiltration de cette partie dans la structure en grains et/ou en morceaux de la couche de base alimentaire (80).

2. Procédé selon la revendication 1,
**caractérisé en ce**
**que** la masse d'aliment complémentaire en état d'écoulement approprié pour la formation de couches à température ambiante est utilisée.

3. Procédé selon la revendication 1,
**caractérisé en ce**
**que** la masse d'aliment complémentaire pouvant être transférer en état d'écoulement approprié pour la formation de couches par une augmentation de température est utilisée.

4. Procédé selon l'une quelconque des revendications 1-3,
**caractérisé en ce**
**que** le réchauffement de la couche d'aliment complémentaire (52) à la température de ramollissement est effectué au moins en partie par un apport de chaleur de la couche de base alimentaire (80).

5. Procédé selon l'une quelconque des revendications 1-4,
**caractérisé en ce**
**que** le réchauffement à la température de ramollissement est effectué au moins en partie par un apport de chaleur externe (84).

6. Procédé selon l'une quelconque des revendications 1-5,
**caractérisé en ce**
**que** la couche de base alimentaire (80) est réchauffée à la température de ramollissement par un apport de chaleur externe (84), en même temps que le réchauffement de la couche d'aliment complémentaire (52).

7. Procédé selon l'une quelconque des revendications 1-6,
**caractérisé en ce**
**que** les températures des deux couches (52,80) sont amenées, au cours du réchauffement de la couche d'aliment complémentaire (52) à la température de ramolissement, en tenant compte du processus de service, à une température de sortie des cuisines correspondante supérieure à la température de consommation.

8. Procédé selon l'une quelconque des revendications 1-7,
**caractérisé en ce**
**qu'**une précuisson de la masse d'aliment complémentaire avant sa congélation et/ou une précuisson de la couche de base alimentaire (80) avant sa disposition en couche est effectuée, de telle sorte que la cuisson pour la consommation est atteinte par un réchauffement des couches respectives pour arriver à la température de consommation et/ou la température de sortie des cuisines essentiellement sans arrêt supplémentaire de la cuisson.

9. Procédé selon l'une quelconque des revendications 1-8,
**caractérisé en ce**
**que** la couche de base alimentaire (80) est préparée avec une surface irrégulière, et en ce que le ramollissement de la plaque d'aliment complémentaire (52) permet que celle-ci soit adaptée à la partie supérieure de la couche de base alimentaire (80).

10. Procédé selon l'une quelconque des revendications 1-9,
**caractérisé en ce**
**que**, par le réchauffement de la couche d'aliment complémentaire(52) et de la couche de base alimentaire (80) à la température de consommation et/ou à la température de sortie des cuisines, une viscosité, au moins pour une partie de la masse d'aliment complémentaire, et une perméabilité de la couche de base alimentaire sont atteintes de sorte que, lorsque la température de consommation et/ou la température de sortie des cuisines est atteinte, au moins une partie de la masse d'aliment complémentaire est coulée dans la couche de base alimentaire (80).

11. Procédé selon l'une quelconque des revendications 1-10,
**caractérisé en ce**
**qu'**une masse d'aliment complémentaire présentant une partie de type sauce, en particulier sous forme de solution ou de suspension aqueuse, en état d'écoulement permettant la formation de couches à température ambiante, par exemple de la béchamel ou de la sauce tomate, est utilisée.

12. Procédé selon l'une quelconque des revendications 1-11, **caractérisé en ce que** la masse d'aliment complémentaire comportant une partie de type sauce est utilisée, laquelle contient du fromage parsemé ou finement dispersé.

13. Procédé selon l'une quelconque des revendications 1-12,
**caractérisé en ce**
**que** la masse d'aliment complémentaire contenant des éléments en morceaux, par exemple des morceaux de légumes, de fruits, de lard, qui conservent au moins en partie, même lorsque la température de consommation et/ou la température de sortie des cuisines est atteinte, de leurs caractéristiques solides, est utilisée.

14. Procédé selon l'une quelconque des revendications 1-13,
**caractérisé en ce**
**que** la masse d'aliment complémentaire contenant des éléments en morceaux, par exemple du fromage, dont les propriétés de ramollissement et de fonte sont telles qu'ils se répartissent lorsqu'ils sont proches de la température de consommation et/ou la température de sortie des cuisines comme une couche ou comme un filet sur la surface de la couche de base alimentaire (80) et prennent, si on le souhaite, un aspect gratiné , est utilisée.

15. Procédé selon l'une quelconque des revendications 1-14,
**caractérisé en ce**
**que** les plaques d'aliment complémentaire (52) sont préparées dans un format dont la taille est adaptée au récipient de cuisine (74) pour la couche de base alimentaire (80).

16. Procédé selon l'une quelconque des revendications 1-14,
**caractérisé en ce**
**que** les plaques d'aliment complémentaire sont préparées dans un format de taille appropriée pour la disposition en mosaïque de la couche de base alimentaire.

17. Procédé selon l'une quelconque des revendications 1-16,
**caractérisé en ce**
**que** la couche de base alimentaire (80), qui contient des morceaux de pommes de terre et/ou des fruits secs et/ou des pâtes et/ou du riz et/ou des morceaux de légumes et/ou des morceaux de viande et/ou des morceaux de poisson, est utilisée.

18. Procédé selon l'une quelconque des revendications 1-17,
**caractérisé en ce**
**qu'**une masse d'aliment complémentaire comportant des éléments qui constituent, après le ramollissement et l'infiltration dans la couche de base alimentaire (80), un composé en cours de stabilisation avec les éléments en grains et/ou en morceaux de la couche de base alimentaire, par exemple le fromage, la farine, l'amidon, l'oeuf et les lactoprotéines, est utilisée.

19. Procédé selon l'une quelconque des revendications 1-18,
**caractérisé en ce**
**que** les plaques d'aliment complémentaire (52) sont déposées en piles ou étalées dans les locaux de cuisine à une température de -18°C environ, où elles sont ensuite utilisées (après un stockage provisoire, si on le souhaite, dans une chambre à température de surgélation) pour être posées sur les couches de base alimentaire (80).

20. Procédé selon l'une quelconque des revendications 1-19,
**caractérisé en ce**
**que** la couche de base alimentaire (80) est retirée du matériau d'accompagnement, dans les locaux de cuisine, pour la réalisation d'autres couches de base dans la cuisine.

21. Procédé selon l'une quelconque des revendications 1-20,
**caractérisé en ce**
**que** la réalisation des plaques d'aliment complémentaire (52) se déroule comme suit :
a) réalisation d'une sauce à haute température ;
b) travail des éléments en morceaux à haute température, dans la mesure où ces éléments en morceaux nécessitent une cuisson ou un complément de cuisson et/ou sont de nature insensible à l'augmentation de température et/ou doivent être parsemés et/ou dispersés ;
c) refroidissement de la sauce ;
d) ajout des éléments en morceaux sensibles à la chaleur ;
e) transvasement dans des moules à congélation (44) ou dans un sachet destiné à imprimer une forme ;
f) dépôt en couche ;
g) surgélation ;
h) conditionnement en cartons et/ou sacs et/ou emballage isolant (56) et/ou en chambre froide et/ou en véhicule réfrigéré.

22. Procédé selon la revendication 21,
**caractérisé en ce**
**que** l'extraction des moules à congélation (44) se produit avant le conditionnement ou sur les lieux de l'utilisation.

23. Procédé selon l'une quelconque des revendications 21-22,
**caractérisé en ce**
**que** le moule à congélation (44) est revêtu avant le remplissage de films de séparation ou de papier de séparation.

24. Procédé selon la revendication 23,
**caractérisé en ce**
**que** les films de séparation (46) sont laissés sur les plaques d'aliment complémentaire (52) avant l'extraction des moules à congélation (44), de préférence peu de temps avant la préparation.

25. Procédé selon l'une quelconque des revendications 1-14, 17, 18 et 20,
**caractérisé en ce**
**que** les granulés contenant des éléments en morceaux sont formés et surgelés.

26. Procédé selon la revendication 25,
**caractérisé en ce**
**que** les granulés surgelés sont associés à des éléments en morceaux surgelés séparément en un mélange qui peut être éparpillé ou déversé, et que celui-ci est dispersé et, le cas échéant, étalé, sur la masse de base alimentaire.

27. Procédé selon la revendication 1 ou 25,
**caractérisé en ce**
**que** les granulés surgelés et des éléments en morceaux sont ajoutés sur la masse de base alimentaire successivement lors de processus de dispersion séparés.
